# EUROPEAN PATENT SPECIFICATION

(11) **EP 1 096 384 B1**
(45) Date of publication and mention of the grant of the patent: **14.05.2008**
(21) Application number: 99830675.7
(22) Date of filing: 26.10.1999
(51) Int. Cl.: G06F 12/08

(54) **Bridge unit between a system bus and a local bus**
Busbrückeeinheit zwischen einem Systembus und einem lokalen Bus
Unité passarelle entre un bus système et un bus local

(43) Date of publication of application: 02.05.2001
(73) Proprietor: BULL S.A., 78434 Louveciennes Cedex (FR)
(72) Inventor: Macchi, Alberto, 20010 Inveruno (Milano) (IT); Bosisio, Giuseppe, 20099 Sesto San Giovanni (Milano) (IT)
(74) Representative: Crippa, Paolo Ernesto

(56) References cited:
- US-A- 5 133 060
- US-A- 5 768 548
- US-A- 5 787 475
- KI A ET AL: "ADAPTIVE DATA PREFETCHING USING CACHE INFORMATION" PROCEEDINGS OF THE INTERNATIONAL CONFERENCE ON SUPERCOMPUTING,US,NEW YORK, ACM, vol. CONF. 11, 1997, pages 204-212, XP000755259 ISBN: 0-89791-902-5

## Description

The present invention relates to a bridge unit between a system bus and a local bus.

A bus is a multipoint channel generally used in a data processing system to connect various units, such as one or more processors, a main memory, and one or more peripheral units, in parallel with each other. In a particular type of data processing system, the processors and the main memory are connected directly to a system bus; the peripheral units, however, are connected to a local bus, which is connected to the system bus by means of a bridge unit. This structure reduces the electrical load on the system bus, and enables the slow peripheral units to make the best use of the speed of the system bus.

Typically the bridge unit is provided with a memory of the cache type (very fast but with a limited capacity) in which data blocks of the main memory are copied. When a peripheral unit requests the sequential reading of data from the main memory, then, if a requested data element is present in the cache memory, this data element is supplied directly from the bridge unit to the requesting peripheral unit; otherwise, the data block comprising the requested data element is read from the main memory and written to the cache memory. At the same time, one or more following blocks are read ahead from the main memory and pre-fetched to the cache memory; the subsequent blocks are read ahead, up to a number equal to a predetermined pre-fetching depth.

In this way it is possible to reduce the number of accesses to the main memory and consequently the number of accesses to the system bus by the bridge unit, since it is statistically highly probable that the other data elements of the blocks written to the cache memory will also be requested subsequently. This enables the time of access to the data in the main memory to be reduced considerably.

A disadvantage of the known structure described above consists in the fact that it is extremely difficult to establish an optimal value for the pre-fetching depth.

In particular, an excessively low value of the pre-fetching depth significantly penalises very fast peripheral units, since it is rather probable that the requested data element will not be present in the cache memory. On the other hand, an excessively high value of the pre-fetching depth leads to a high cost of the bridge unit (due to the larger size of the cache memory); at the same time, very slow peripheral units do not make any use of the greater probability that the requested data element is present in the cache memory.

Documents US-A-5787475, US-A-5133060 and US-A-5768548 describe pre-fetching techniques.

The object of the present invention is to overcome the aforesaid drawbacks. To achieve this object, a bridge unit as described in the first claim is proposed.

Briefly, there is provided a bridge unit between a system bus to which a main memory is connected and a local bus to which is connected a plurality of peripheral units capable of reading data in sequence from the main memory, the bridge unit comprising a cache memory for copying a plurality of data blocks of the main memory, means for reading from the main memory and writing to the cache memory a block containing a data element requested by one of the peripheral units and for reading ahead from the main memory and writing to the cache memory at least one block following the block containing the requested data element, the at least one following block being in a number equal to a pre-fetching depth, in which means are provided for defining a plurality of disjoint groups of peripheral units and for associating each group of peripheral units with the corresponding pre-fetching depth.

The present invention also proposes a data processing system comprising this bridge unit and a corresponding method for operating the bridge unit.

Further characteristics and the advantages of the bridge unit according to the present invention will be made clear by the following description of a preferred embodiment of the invention, provided for guidance and without restriction, with reference to the attached figures, in which:
Fig. 1 is a schematic block diagram of a data processing system in which the bridge unit according to the present invention can be used;
Fig. 2 shows schematically the structure of the bridge unit;
Fig. 3 shows in greater detail one block of the bridge unit.

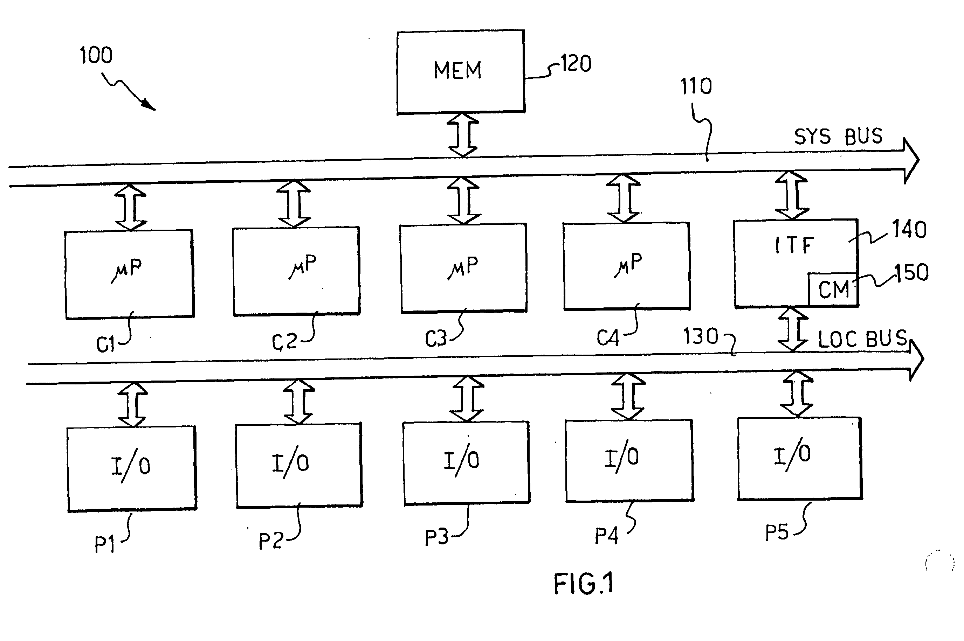

With reference to Fig. 1 in particular, a data processing system 100 with a symmetrical processor architecture is illustrated. The data processing system 100 comprises a system bus (SYSBUS) 110 to which are connected in parallel a plurality of microprocessors (µP) C1, C2, C3 and C4 (four in the illustrated example) and a main memory (MEM) 120; the main memory 120 consists of a memory of the DRAM (Dynamic Random Access Memory) type, associated with a corresponding control logic which also acts as arbitrator of mutually exclusive access (in master mode) to the system bus 110.

Several input/output peripheral units (I/O) P1, P2, P3, P4 and P5 (five in the illustrated example) are grouped together to form a cluster. The peripheral units P1-P5 are connected to a local bus (LOCBUS) 130, for example one of the PCI (Peripheral Component Interconnect) type. A bridge unit (ITF) 140 operates as an interface between the system bus 110 and the local bus 130; in particular, the bridge unit 140 controls the various communication protocols of the system bus 110 and the local bus 130, the various timings and the various data and address formats. The bridge unit 140 also acts as arbitrator of the mutually exclusive access (in master mode) to the local bus 130.

The communication between the microprocessors C1-C4 and the peripheral units P1-P5 is controlled in DMA (Direct Memory Access) mode. In particular, whenever a microprocessor (for example the microprocessor C2) has to send output data to a peripheral unit (for example the peripheral unit P3), the microprocessor C2 provides the peripheral unit P3 with an address in the main memory 120 from which the data elements are to be read and the number of the data elements. The peripheral unit P3 directly controls an operation of reading the data in sequence from the central memory 120 (DMA channel) and, at the end, signals the completion of the DMA channel to the microprocessor C2. This technique makes it possible to serve peripheral units P1-P5 which require large quantities of data, while freeing the microprocessors C1-C4.

The bridge unit 140 is provided with an internal memory of the cache type (CM) 150, in which data blocks (cache lines) of the main memory 120 are copied. For each data element requested by the peripheral unit P3, the block containing the requested data element and one or more following blocks, the number of these being equal to a pre-fetching depth, are read from the main memory 120 and written to the cache memory 150.

Similar considerations are applicable in cases where the data processing system has a different architecture (even with a single processor), a different number of peripheral units or several nodes with corresponding local buses and bridge units are provided, another mode of controlling the peripheral units is used, or similar.

As described in detail below, various disjoint groups of peripheral units, each associated with a corresponding pre-fetching depth, are defined within the bridge unit according to the present invention.

This solution makes it possible to use an optimal pre-fetching depth for each type of peripheral unit; this enables the best use to be made of the performance of the very fast peripheral units, while keeping the size of the cache memory (and therefore the cost of the bridge unit) reasonably small.

This result is obtained in an extremely simple and efficient way with a structure which can be adapted very rapidly to the most varied conditions of use.

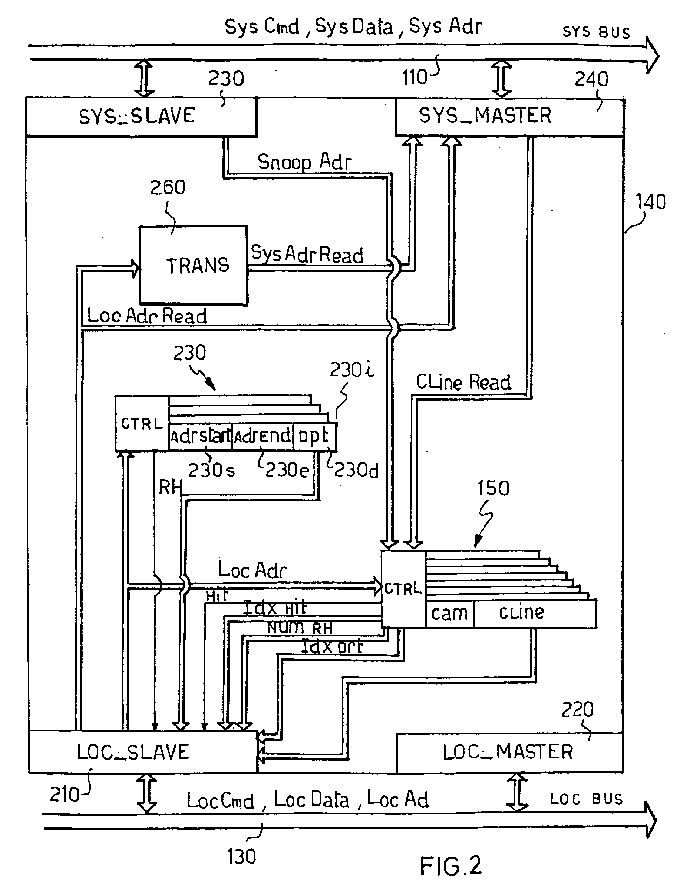

With reference now to Fig. 2, control signals (LocCmd), data (LocData) and local data addresses (LocAdr) for access to the main memory are transmitted on the local bus 130; each data element consists of 8 bytes (the transmission of the data element on the local bus 130 takes place in a single operation or is serialised into two successive operations, in each of which 4 bytes are transmitted, according to the type of peripheral unit), while each local address consists of 32 bits. Each peripheral unit is associated with a local address space (from 0 to 2³²-1=4G-1 in the example in question).

Similar control signals (SysCmd), data blocks (SysData) and system addresses of the data blocks (SysAdr) are transmitted on the system bus 110; each data block consists of 128 bytes, in other words 16 data elements of 8 bytes each (the transmission of the data block on the system bus 110 is serialised into a plurality of successive operations), while each system address consists of 64 bits.

The bridge unit 140 includes a local slave block (LOC_SLAVE) 210 and a local master block (LOC_MASTER) 220 which control access to the local bus 130 in slave mode and in master mode respectively; similarly, a system slave block (SYS_SLAVE) 230 and a system master block (SYS_MASTER) 240 control access to the system bus 110 in slave mode and in master mode respectively.

The local slave block 210 receives at its input the local address LocAdr transmitted on the local bus 130; the local slave block 210 produces at its output a signal LocAdrH representing a local address of a data block (consisting of the 16 most significant bits of the corresponding local address), which is supplied to the input of a pre-fetching block 230. The pre-fetching block 230 consists of a bank of registers (4, for example) and a corresponding control logic (CTRL). Each register is associated with a different group of peripheral units; the group of peripheral units is defined by a range of local addresses comprising the local address spaces of the corresponding peripheral units. In particular, a generic register 230i comprises a field 230s (16 bits) which contains the local address of an initial data block of the range (AdrStart), a field 230e (16 bits) which contains the local address of an end data block of the range (AdrEnd), and a field 230d which contains a predetermined pre-fetching depth for the peripheral units of the group (Dpt); the field 230d consists of 2 bits, so that the predetermined pre-fetching depth may take a value from 0 to 3.

If we consider, for example, the data processing system shown in Fig. 1, the peripheral units P1, P2, P3, P4 and P5 are associated with the address space from 0 to 512M-1, from 512M to 1G-1, from 1G to 2G-1, from 2G to 3G-1, and from 3G to 4G-1 respectively. A first group of peripheral units P1, P2, defined by the address range from 0 to 1G-1 (AdrStart=0 and AdrEnd=1G-1), is associated with a predetermined pre-fetching depth Dpt of 1 (relatively slow peripheral units), while a second group of peripheral units P3, P4, P5, defined by the range of addresses from 1G to 4G-1 (AdrStart=1G and AdrEnd=4G-1), is associated with a predetermined pre-fetching depth Dpt of 3 (very fast peripheral units).

The control logic of the pre-fetching block 230 generates a signal RH indicating that the local block address LocAdrH is included in one of the address ranges defined by the fields 230s and 230e. The signal RH and the predetermined pre-fetching depth Dpt stored in the corresponding field 230d are supplied to the input of the local slave block 210.

The local block address LocAdrH is also supplied to the input of the cache memory 150. The cache memory 150 consists of an associative memory, having for example 8 entries, and a corresponding control logic (CTRL). Each location contains a data block (CLine) and corresponding service data (Cam), such as a validity flag, the corresponding local address and the corresponding system address.

The control logic of the cache memory 150 generates a signal Hit indicating that the data block identified by the local block address LocAdrH is present in the cache memory 150. The signal Hit and the corresponding data block Cline are supplied to the input of the local slave block 210. The control logic of the cache memory 150 also generates a signal IdxHit and a signal NumRH which are also supplied to the input of the local slave block 210. The signal IdxHit represents an index (from 0 to 7) of the entry in which the data block thus identified is stored; the signal NumRH represents the number of data blocks, pre-fetched to the cache memory 150, following the identified data block, in other words those whose local block addresses have a directly following value.

The local slave block 210 generates a signal LocAdrRead representing the local address of a data block to be read from the main memory and to be written to the cache memory 150. The local block address LocAdrRead is supplied to the input of the system master block 240 and to an address translation block (TRANS) 260, comprising for example a TCE (Translation Control Entry) table. The translation block 260 calculates from the local block address LocAdrRead the corresponding system address SysAdrRead, which is supplied to the input of the system master block 240.

The system master block 240 supplies to the input of the cache memory 150 a signal CLineRead representing the information relating to a new data block to be written (the data block with the corresponding local address and the corresponding system address). The cache memory 150 also receives at its input from the system slave block 230 a signal SnoopAdr representing the system address of a modified data block in the main memory or in a cache memory of a microprocessor, which is used to control the coherence of the data copied to the cache memory 150. Finally, the control logic of the cache memory 150 generates a signal IdxDrt which is supplied to the input of the local slave block 210; the signal IdxDrt represents the index of an entry in the cache memory which has been replaced (by a new data block) or invalidated (non-coherent data block).

Each DMA channel generally contains various reading transactions (reading cycles), in each of which a series of data are transferred. When a peripheral unit which requests a series of data has obtained access in master mode to the local bus 130, the requesting peripheral unit initiates an address phase of the reading transaction in which the local address of an initial data element of the current series is sent on the local bus 130. The bridge unit 140 receives the local address LocAdr and identifies itself as the destination of the reading transaction.

The bridge unit 140 checks whether the block comprising the initial data element is present in the cache memory 150. In particular, if the data block identified by the local block address LocAdrH (obtained from the local address LocAdr received from the local bus 130) is not present in the cache memory 150 (miss), the signal Hit is deasserted. Consequently, the bridge unit 140 sends to the requesting peripheral unit a control signal LocCmd having a value (Retry) indicating the fact that the requested data are not available, so that the reading transaction is cancelled and repeated subsequently.

If, on the other hand, the data block identified by the local block address LocAdrH is present in the cache memory 150 (hit), the signal Hit is asserted and the control logic of the cache memory 150 supplies the corresponding data block CLine to the local slave block 210. Consequently, a data phase of the reading transaction is initiated, in which the local slave block 210 sends the data of the current series in succession along the local bus 130, in burst mode.

In particular, the local slave block 210 sends the data of the block Cline (starting from the data element identified by the local address AdrLoc) in succession along the local bus 130. When the end of the data block Cline is reached, the local block address LocAdrH is incremented by one, and a check is made as to whether the next data block thus identified is present in the cache memory 150. If this is not the case, the signal Hit is deasserted; consequently, the bridge unit 140 sends to the requesting peripheral unit a control signal LocCmd having a value (Stop) indicating the fact that the data phase is concluded, so that the peripheral unit terminates the reading transaction. If, on the other hand, the next data block is present in the cache memory 150, the signal Hit is kept asserted and the control logic of the cache memory 150 supplies this data block Cline to the local slave block 210; the local slave block 210 then continues to send the data of the next block (from the first data element) in succession along the local bus 130. These operations are repeated until all the data of the current series have been received by the requesting peripheral unit, which consequently terminates the reading transaction.

At the same time, the predetermined pre-fetching depth associated with the current series is obtained, by comparing the local address of the initial data element with the address ranges defined by the fields 230s and 230e. In particular, the control logic of the pre-fetching block 250 checks whether the local block address LocAdrH is included in one of these address ranges. If this is not the case, for example when the transaction is executed by a unit connected to the local bus 130 which operates in peer-to-peer mode with the bridge unit 140, the signal RH is deasserted and consequently the local slave block 210 does not carry out any reading ahead.

If, on the other hand, the local block address LocAdrH is included in one of the address ranges, the signal RH is asserted and the control logic of the pre-fetching block 230 supplies the corresponding predetermined pre-fetching depth Dpt to the local slave block 210. Consequently, the local slave block 210 activates the reading from the main memory and the writing to the cache memory 150 of further data blocks following the pre-fetched data blocks, the number of these further blocks being equal to the difference between the predetermined pre-fetching depth Dpt (dynamically modified in case, as described in detail below) and the number of pre-fetched data blocks NumRH. For each further data block, the local slave block 210 generates in succession the local block address LocAdrRead, from which the address translation block 260 obtains the corresponding system address SysAdrRead.

The system master block 240 activates the reading from the main memory of the data block identified by the system address SysAdrRead. As soon as the system master block 240 receives the data block SysData from the system bus 110, it generates the corresponding signal CLineRead (data block, corresponding system address and corresponding local address). The control logic of the cache memory 150 inserts the data of the new data block CLineRead into an available entry; if there is no entry available, an entry selected, for example, by an algorithm of the LRU (Least Recently Used) type is released and its content is then replaced with these data.

In the meantime, the system slave block 230 executes a snooping process in which it continuously monitors the transactions executed on the system bus 110. If a transaction includes the modification of a data block (in the main memory or in the cache memory of a microprocessor), the system slave block 230 generates the corresponding signal SnoopAdr (system address of the modified data block). The control logic of the cache memory 150 checks whether it contains the data block identified by the signal SnoopAdr. If this is the case, this data block is invalidated (and therefore the corresponding validity flag is deasserted).

Whenever one data block is replaced (by a new data block) or is invalidated (non-coherent data block) the control logic of the cache memory 150 generates the corresponding non-valid entry index IdxDrt.

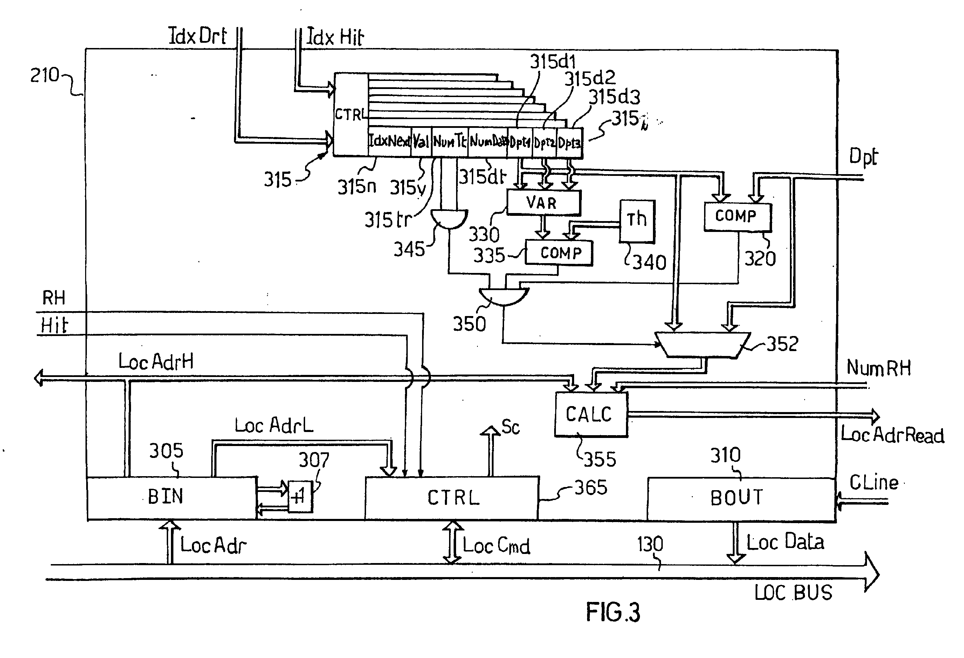

With reference now to Fig. 3, the local slave block 210 includes an input buffer memory (BIN) 305; the input buffer 305 is connected to the local bus 130 and is used to latch the local address LocAdr. The local address stored in the input buffer 305 is supplied to the input of an incrementing circuit (+1) 307, whose output is written to the input buffer 305. The 16 most significant bits of the local address stored in the input buffer 305 form the signal LocAdrH which is supplied outside the local slave block 210. An output buffer (BOUT) 310 receives at its input the data block Cline and is connected to the local bus 130 to send the data element LocData.

The signals IdxHit and IdxDrt are received at the input of a dynamic depth block 315 consisting of an array of records (8, for example) and a corresponding control logic (CTRL). Each record is associated with an active DMA channel; in particular, a generic record 315i comprises a field 315n which contains the index of the entry of the cache memory in which is stored the block containing the data element following the last data element supplied to the requesting peripheral unit (IdxNext). The record 315i also comprises a field 315v which contains a validity flag (Val), a (module 4) counter 315tr which contains the number of reading transactions executed (NumTr), a counter 315dt which contains the number of data elements supplied to the requesting peripheral unit in the current series (NumData), and a shift register consisting of three cells 315d1, 315d2 and 315d3 which contain a modified pre-fetching depth (Dpt1, Dpt2 and Dpt3 respectively) calculated (as described in detail below) for the three data series preceding the current series.

The output of the cell 315d1 is connected to a first input of a comparator (COMP) 320; a second input of the comparator 320 receives the predetermined pre-fetching depth Dpt (stored in the pre-fetching block). The outputs of the cells 315d1, 315d2 and 315d3 are connected to separate inputs of a variability block (VAR) 330. The variability block 330 generates an output signal which represents the total deviation of the predetermined pre-fetching depths Dpt1, Dpt2 and Dpt3 from their mean value, which is supplied to a first input of a further comparator (COMP) 335; a second input of the comparator 335 receives a threshold value (Th) stored in a register 340. Each bit of the counter 315tr is supplied to a corresponding input of a logical AND gate 345. The output of the comparator 320, the output of the comparator 335 and the output of the logical AND gate 345 are connected to separate inputs of a further logical AND gate 350.

The output of the logical AND gate 350 is connected to a control input of a multiplexer 352. The multiplexer 352 receives the predetermined pre-fetching depth Dpt at a first input and the modified pre-fetching depth Dpt1 at a second input. The output of the multiplexer 352, the signal NumRH and the signal LocAdrH are supplied to separate inputs of a calculation circuit (CALC) 355; the calculation circuit 355 generates at its output the signal LocAdrRead.

The operation of the local slave block 210 is controlled by a control logic (CTRL) 365 consisting essentially of a finite state machine which acts as a sequence controller for commands indicated cumulatively by Sc. The 16 least significant bits of the local address stored in the input buffer 305, which represent an offset of the data element within the block, form a signal LocAdrL which is supplied to the input of the control logic 365; the control logic 365 also receives the signal Hit and the signal RH at its input. In addition, the control logic 365 is connected to the local bus 130 to receive and send the control signal LocCmd.

During a reading transaction, the local address of the initial data element of the current series is written to the input buffer 305. If the initial data element is present in the cache memory (signal Hit asserted), the corresponding data block Cline (identified by the local block address LocAdrH) is written to the output buffer 310.

At the same time, the index of the identified data block IdxHit is supplied to the dynamic depth block 315. If the reading transaction relates to a DMA channel with reading ahead (signal RH asserted), the control logic of the dynamic depth block 315 checks whether a record 315i associated with the current DMA channel identified by the signal IdxHit is present (next data element entry index IdxNext equal to the signal IdxHit, with validity flag Val asserted).

If this is not the case, the control logic of the dynamic depth block 315 stores the index of the identified data block IdxHit in the field 315n of the first available record 315i (the array of records is designed in such a way that it is not possible for all the records 315i to be occupied, since the maximum number of simultaneously active DMA channels is equal to the number of entries in the cache memory); the validity flag Val is asserted, and the counters 315tr, 315dt and the shift register cells 315d1-315d3 are reset to zero. If, on the other hand, there is a record 315i associated with the current DMA channel identified by the signal IdxHit, the number of reading transactions NumTr is incremented by one.

The data element identified by the offset LocAdrL is extracted from the output buffer 310 and is sent along the local bus 130; if the requesting peripheral unit has a byte-size of 8, this data element is sent directly along the local bus 130, while if the requesting peripheral unit has a byte-size of 4 the transmission of this data element on the local bus 130 is serialised into two successive operations. The local address stored in the input buffer 305 is continually incremented by one (by the incrementing circuit 307). In this way, the offset LocAdrL identifies the data following the initial data element of the current series in the output buffer 310, and consequently these data are sent in succession along the local bus 130. At the same time, the control logic of the dynamic depth block 315 continually increments by one the number of data elements supplied NumData.

When the end of the data block stored in the output buffer 310 is reached (the offset LocAdrL is zero), the local block address LocAdrH is incremented by one. If the following data block identified by the local block address LocAdrH is present in the cache memory (signal Hit asserted), the next data block Cline is written to the output buffer 310 and the data therein are sent in succession along the local bus 130 (from the first data element), while the local address stored in the input buffer 305 and the number of data elements supplied NumData are simultaneously incremented. If the next data block identified by the local block address LocAdrH is not present in the cache memory (signal Hit deasserted), the data phase is concluded (the control signal LocCmd has the value Stop); at the same time, the validity flag Val is deasserted.

When the reading transaction is terminated by the requesting peripheral unit (current series completely received), the previously described operations of access to the data element following the last data element supplied to the requesting peripheral unit are executed (without the data element being sent along the local bus 130). Thus, if the next data element is contained in the data block written to the output buffer 310, or in the next data block written to the cache memory, the field 315n automatically contains the index of the entry of the cache memory in which the block containing the next data element is stored. In the opposite case (next data element not written to the cache memory), the validity flag Val is deasserted.

If the validity flag Val is asserted, the content of the shift register 315d1-315d3 is shifted to the right, in such a way that the content of the cell 315d2 is written to the cell 315d3 and the content of the cell 315d1 is written to the cell 315d2 (with the content of the cell 315d3 which is lost). The control logic of the dynamic depth block 315 calculates from the number of data elements supplied NumData the corresponding modified pre-fetching depth Dpt1 (for example by dividing the number of data elements supplied NumData by 8, the number of data elements in one block), which is written to the cell 315d1. The counter 315dt is then reset to zero.

At the start of the reading transaction, the reading from the main memory and the writing to the cache memory of the further data blocks following pre-fetched data blocks is activated simultaneously. In particular, it is assumed that the counter 315tr has reached the end-of-count value (4 in the example in question), and consequently all of its bits are equal to 1 and the output of the logical AND gate 345 is equal to 1. At the same time, it is assumed that the deviation produced at the output of the variability block 330 is less than the threshold value Th stored in the register 340, and consequently the output of the comparator 335 is also equal to 1. In this case, the output of the logical AND gate 350 is equal to the output of the comparator 320. If the modified pre-fetching depth Dpt1 is less than the predetermined pre-fetching depth Dpt, the output of the comparator 320 takes the value 1, and consequently the output of the logical AND gate 350 also takes the value 1 and causes the modified pre-fetching depth Dpt1 to be transferred to the output of the multiplexer 352; in the opposite case, the output of the comparator 320 takes the value 0, and consequently the output of the logical AND gate 350 also takes the value 0 and causes the predetermined pre-fetching depth Dpt to be transferred to the output of the multiplexer 352.

Conversely, if the counter 315tr has not reached the end-of-count value, at least one of its bits is equal to 0, and consequently the output of the logical AND gate 345 is equal to 0. Similarly, if the deviation produced at the output of the variability block 330 is equal to or greater than the threshold value Th stored in the register 340, the output of the comparator 335 is equal to 0. In both cases, the output of the logical AND gate 350 is always equal to 0; this forces the multiplexer 352 to transmit to its output the predetermined pre-fetching depth Dpt, independently of the value of the signal at the output of the comparator 320.

In each case, the calculation circuit 355 consequently generates the signal LocAdrRead, which is equal to the local block address LocAdrH plus the number of pre-fetched data blocks NumRH incremented successively by one up to the value of the local block address LocAdrH plus the pre-fetching depth supplied by the multiplexer 352, in other words the predetermined pre-fetching depth Dpt or the modified pre-fetching depth Dpt1 (LocAdrRead = LocAdrH+NumRH+1, LocAdrH+NumRH+2, ... LocAdrH+Dpt or LocAdrH+Dpt1).

Finally, whenever a data block of the cache memory is replaced or invalidated, the dynamic depth block 315 receives the corresponding non-valid entry index IdxDrt. The control logic of the dynamic depth block 315 checks whether there is a record 315i associated with an active DMA channel identified by the signal IdxDrt (next data element entry index IdxNext equal to the signal IdxDrt). If this is the case, the corresponding validity flag Val is deasserted.

Similar considerations are applicable in cases where a different data format and a different address format (either the local ones or the system ones) are provided, another communication protocol is used on the local bus and on the system bus, the cache memory is controlled in a different way, the pre-fetching block has another structure or a different number of records, the peripheral units are divided into any number of groups (each comprising one or more peripheral units), the pre-fetching depth can take other values, the bridge unit and the local slave block have a different structure and a different functionality, or similar.

The embodiment of the present invention described above can be used to vary dynamically the pre-fetching depth associated with each peripheral unit, as a function of the actual speed of the unit. In this way, the writing of unnecessary data blocks to the cache memory is avoided, therefore increasing the number of simultaneously active DMA channels. Moreover, the pre-fetching depth can never be greater than the predetermined pre-fetching depth Dpt; this feature prevents penalising the other active DMA channels (by reducing the number of entries available in the cache memory for pre-fetching the corresponding blocks).

The variability block 330 and the register 340 make it possible to activate selectively the dynamic variation of the pre-fetching depth only for the active DMA channels showing a regular behaviour, in which the number of data elements does not vary excessively from one series to the next; this ensures that the modified pre-fetching depth (calculated according to the number of data elements in the preceding series) is also applicable, with a good degree of probability, to the current series. Similarly, the counter 315tr makes it possible to activate selectively the dynamic variation of the pre-fetching depth only after a predetermined number of initial reading transactions (4 in the example in question); this ensures that the evaluation of the speed of the requesting peripheral unit is carried out in the proper conditions.

Preferably, the reading ahead of the following data blocks is activated selectively only if the current series consists of a number of data elements greater than a predetermined value. In general, each peripheral unit can execute various types of reading transactions, each of which is identified by a corresponding command code of the control signal LocCmd. For example, in a reading transaction of the simple type a series consisting of a maximum of 8 data elements (the number of data elements in one block) is requested, in a reading transaction of the line type a series consisting of exactly 8 data elements is requested, while in a reading transaction of the multiple type a series consisting of more than 8 data elements is requested. In this case, the control logic 365 activates the reading ahead of the following blocks only if the command code included in the control signal LocCmd indicates that the peripheral unit has requested a reading transaction of the multiple type. This makes it possible to execute the reading ahead of the following blocks only when this is really necessary, thus avoiding overloading the bridge unit with unnecessary operations.

Similar considerations are applicable in cases where the pre-fetching depth is varied in another way (generally as a function of the number of data elements of one or more series preceding the current series in the DMA channel), a different number of modified pre-fetching depths are stored, or an indicator different from the deviation is used to evaluate their variability, the predetermined number of initial reading transactions has a different value, the predetermined value for activating the reading ahead of the following data blocks is different (for example equal to the number of data elements in two or more blocks), or similar. The bridge unit according to the present invention can, however, also be made without dynamic variation of the pre-fetching depth, or with the reading ahead always active (independently of the number of data elements in the current series).

Clearly, a person skilled in the art may, in order to meet contingent and specific requirements, make numerous modifications and variations to the bridge unit described above, all these modifications and variations being included within the scope of protection of the invention, as defined by the following claims.

## Claims

1. Bridge unit (140) connectable between a system bus (110) to which a main memory (120) is connected and a local bus (130) to which is connected a plurality of peripheral units (P1-P5) capable of reading data in sequence from the main memory (120), the bridge unit (140) comprising a cache memory (150) for copying a plurality of data blocks of the main memory (120), means (210, 230, 240, 260) for reading from the main memory (120) and writing to the cache memory (150) a block containing a data element requested by one of the peripheral units (P1-P5) and for reading ahead from the main memory (120) and writing to the cache memory (150) at least one block following the block containing the requested data element, the at least one following block being in a number equal to a pre-fetching depth,
**characterised in that**
it includes means (210, 230) for defining a plurality of disjoint groups of peripheral units (P1-P5) and for associating each group of peripheral units (P1-P5) with the corresponding pre-fetching depth.

2. Bridge unit (140) according to Claim 1, wherein each peripheral unit (P1-P5) is associated with an address space for the data of the main memory (120), each group of peripheral units (P1-P5) being defined by a range of addresses comprising the address spaces associated with the corresponding peripheral units (P1-P5).

3. Bridge unit (140) according to Claim 2, wherein each peripheral unit (P1-P5) is capable of executing reading operations in each of which a plurality of series of data is transferred to the requesting peripheral unit (P1-P5), the pre-fetching depth associated with a current one of the series being calculated by comparing the address of an initial data element of the current series with the address ranges.

4. Bridge unit (140) according to any one of Claims 1 to 3, further comprising means (315-352) for dynamically varying the pre-fetching depth associated with each peripheral unit (P1-P5).

5. Bridge unit (140) according to Claim 4 when dependent on Claim 3, further comprising means (230d) for storing a predetermined pre-fetching depth for each address range and means (315dt, 315d1) for determining a modified pre-fetching depth which is a function of the number of data elements in at least one series preceding the current series in the reading operation, and means (320, 352) for set the pre-fetching depth associated with the current series to a value equal to the smaller of the corresponding stored pre-fetching depth and the corresponding modified pre-fetching depth.

6. Bridge unit (140) according to Claim 5, further comprising means (315d1-315d3) for storing the modified pre-fetching depth associated with each of a plurality of series preceding the current series in the reading operation, and means (330-340) for selectively activating the means of dynamic variation (315-352) for the current series only if an index indicating the variability of the corresponding stored modified depths is less than a threshold value.

7. Bridge unit (140) according to Claim 5 or 6, further comprising means (315tr) for selectively activating the means of dynamic variation (315-352) for the current series only after a predetermined number of series transferred initially in the reading operation.

8. Bridge unit (140) according to any one of Claims 3 to 7, further comprising means (365) for selectively activating the reading ahead of the at least one following block only if the current series consists of a number of data elements greater than a predetermined value.

9. Data processing system (100) comprising a system bus (110), a main memory (120) connected to the system bus (110), at least one local bus (130), a plurality of peripheral units (P1-P5) connected to the at least one local bus (130), the peripheral units (P1-P5) being capable of reading data in sequence from the main memory (120), and at least one bridge unit (140) between the system bus (110) and the at least one local bus (130) according to any one of Claims 1 to 8.

10. Method for operating a bridge unit (140) between a system bus (110) to which a main memory (120) is connected and a local bus (130) to which is connected a plurality of peripheral units (P1-P5) capable of reading data in sequence from the main memory (120), in which the bridge unit (140) comprises a cache memory (150) for copying a plurality of data blocks of the main memory (120), the method comprising the steps of:
reading from the main memory (120) and writing to the cache memory (150) a block containing a data element requested by one of the peripheral units (P1-P5),
reading ahead from the main memory (120) and writing to the cache memory (150) at least one block following the block containing the requested data element, the at least one following block being in a number equal to a pre-fetching depth,
**characterised by** the steps of
defining a plurality of disjoint groups of peripheral units (P1-P5),
associating each group of peripheral units (P1-P5) with the corresponding pre-fetching depth.

## Patentansprüche

1. Brückeneinheit (140), die zwischen einem Systembus (110), mit dem ein Hauptspeicher (120) verbunden ist, und einem Lokalbus (130), mit dem eine Mehrzahl von peripheralen Einheiten (P1 - P5) verbunden ist, die Daten in einer Sequenz aus dem Hauptspeicher (120) lesen können, verbindbar ist, wobei die Brückeneinheit (140) einen Cache-Speicher (150) zum Kopieren einer Mehrzahl von Datenblöcken des Hauptspeichers (120), eine Einrichtung (210, 230, 240, 260) zum Lesen, aus dem Hauptspeicher (120), und zum Schreiben, in den Cache-Speicher (150), eines Blocks, der ein Datenelement enthält, das durch eine der peripheralen Einheiten (P1 - P5) angefordert wird, und zum Vorauslesen, aus dem Hauptspeicher (120), und Schreiben, in den Cache-Speicher (150), zumindest eines Blocks, der dem Block folgt, der das angeforderte Datenelement enthält, wobei der zumindest eine folgende Block in einer Anzahl gleich einer Vorababruftiefe ist, aufweist,
**dadurch gekennzeichnet, dass**
dieselbe eine Einrichtung (210, 230) zum Definieren einer Mehrzahl von getrennten Gruppen der peripheralen Einheiten (P1 - P5) und zum Zuordnen jeder Gruppe der peripheralen Einheiten (P1 - P5) zu der entsprechenden Vorababruftiefe umfasst.

2. Brückeneinheit (140) gemäß Anspruch 1, bei der jede peripherale Einheit (P1 - P5) einem Adressraum für die Daten des Hauptspeichers (120) zugeordnet ist, wobei jede Gruppe der peripheralen Einheiten (P1 - P5) durch einen Bereich von Adressen definiert ist, der die Adressräume aufweist, die den entsprechenden peripheralen Einheiten (P1 - P5) zugeordnet sind.

3. Brückeneinheit (140) gemäß Anspruch 2, bei der jede peripherale Einheit (P1 - P5) Leseoperationen ausführen kann, in denen jeweils eine Mehrzahl von Serien von Daten zu der anfordernden peripheralen Einheit (P1 - P5) transferiert wird, wobei die Vorababruftiefe, die einer gegenwärtigen der Serien zugeordnet ist, durch ein Vergleichen der Adresse eines Anfangsdatenelements der gegenwärtigen Serie mit den Adressbereichen berechnet wird.

4. Brückeneinheit (140) gemäß einem der Ansprüche 1 bis 3, die ferner eine Einrichtung (315 - 352) zum dynamischen Variieren der Vorababruftiefe aufweist, die jeder peripheralen Einheit (P1 - P5) zugeordnet ist.

5. Brückeneinheit (140) gemäß Anspruch 4 in Rückbeziehung auf Anspruch 3, die ferner eine Einrichtung (230d) zum Speichern einer vorbestimmten Vorababruftiefe für jeden Adressbereich und eine Einrichtung (315dt, 315d1) zum Bestimmen einer modifizierten Vorababruftiefe, die eine Funktion der Anzahl von Datenelementen in zumindest einer Serie ist, die der gegenwärtigen Serie in der Leseoperation vorangeht, und eine Einrichtung (320, 352) zum Setzen der Vorababruftiefe, die der gegenwärtigen Serie zugeordnet ist, auf einen Wert gleich der kleineren der entsprechenden gespeicherten Vorababruftiefe und der entsprechenden modifizierten Vorababruftiefe aufweist .

6. Brückeneinheit (140) gemäß Anspruch 5, die ferner eine Einrichtung (315d1 - 315d3) zum Speichern der modifizierten Vorababruftiefe, die jeder aus einer Mehrzahl von Serien zugeordnet ist, die der gegenwärtigen Serie in der Leseoperation vorangehen, und eine Einrichtung (330 - 340) zum selektiven Aktivieren der Einrichtung zur dynamischen Variation (315 - 352) für die gegenwärtige Serie lediglich, wenn ein Index, der die Variabilität der entsprechenden gespeicherten modifizierten Tiefen anzeigt, geringer als ein Schwellenwert ist, aufweist.

7. Brückeneinheit (140) gemäß Anspruch 5 oder 6, die ferner eine Einrichtung (315tr) zum selektiven Aktivieren der Einrichtung zur dynamischen Variation (315 - 352) für die gegenwärtige Serie lediglich nach einer vorbestimmten Anzahl von Serien, die anfänglich in der Leseoperation transferiert werden, aufweist.

8. Brückeneinheit (140) gemäß einem der Ansprüche 3 bis 7, die ferner eine Einrichtung (365) zum selektiven Aktivieren des Vorauslesens des zumindest einen folgenden Blocks lediglich, wenn die gegenwärtige Serie eine Anzahl von Datenelementen größer als ein vorbestimmter Wert umfasst, aufweist.

9. Datenverarbeitungssystem (100), das einen Systembus (110), einen Hauptspeicher (120), der mit dem Systembus (110) verbunden ist, zumindest einen Lokalbus (130), eine Mehrzahl von peripheralen Einheiten (P1 - P5), die mit dem zumindest einen Lokalbus (130) verbunden sind, wobei die peripheralen Einheiten (P1 - P5) Daten in einer Sequenz aus dem Hauptspeicher (120) lesen können, und zumindest eine Brückeneinheit (140) zwischen dem Systembus (110) und dem zumindest einen Lokalbus (130) gemäß einem der Ansprüche 1 bis 8 aufweist.

10. Verfahren zum Betreiben einer Brückeneinheit (140) zwischen einem Systembus (110), mit dem ein Hauptspeicher (120) verbunden ist, und einem Lokalbus (130), mit dem eine Mehrzahl von peripheralen Einheiten (P1 - P5) verbunden ist, die Daten in einer Sequenz aus dem Hauptspeicher (120) lesen können, wobei die Brückeneinheit (140) einen Cache-Speicher (150) zum Kopieren einer Mehrzahl von Datenblöcken des Hauptspeichers (120) aufweist, wobei das Verfahren folgende Schritte aufweist:
Lesen, aus dem Hauptspeicher (120), und Schreiben, in den Cache-Speicher (150), eines Blocks, der ein Datenelement enthält, das durch eine der peripheralen Einheiten (P1 - P5) angefordert wird,
Vorauslesen, aus dem Hauptspeicher (120), und Schreiben, in den Cache-Speicher (150), zumindest eines Blocks, der dem Block folgt, der das angeforderte Datenelement enthält, wobei der zumindest eine folgende Block in einer Anzahl gleich einer Vorababruftiefe ist,
**gekennzeichnet durch**
Definieren einer Mehrzahl von getrennten Gruppen der peripheralen Einheiten (P1 - P5),
Zuordnen jeder Gruppe der peripheralen Einheiten (P1 - P5) zu der entsprechenden Vorababruftiefe.

## Revendications

1. Unité formant pont (140) pouvant être connectée entre un bus système (110) auquel est connectée une mémoire principale (120) et un bus local (130) auquel sont connectées une pluralité d'unités périphériques (P1-P5) capables de lire des données en séquence depuis la mémoire principale (120), l'unité formant pont (140) comprenant une antémémoire (150) pour copier une pluralité de blocs de données de la mémoire principale (120), un moyen (210, 230, 240, 260) pour lire depuis la mémoire principale (120) et écrire dans l'antémémoire (150) un bloc contenant un élément de données demandé par l'une des unités périphériques (P1-P5) et pour lire de façon anticipée depuis la mémoire principale (120) et écrire dans l'antémémoire (150) au moins un bloc faisant suite au bloc contenant l'élément de données demandé, le nombre de l'au moins un bloc suivant étant égal à une profondeur de pré-recherche,
**caractérisée en ce que**
elle comprend un moyen (210, 230) pour définir une pluralité de groupes disjoints d'unités périphériques (P1-P5) et pour associer chaque groupe d'unités périphériques (P1-P5) à la profondeur de pré-recherche correspondante.

2. Unité formant pont (140) selon la revendication 1, dans laquelle chaque unité périphérique (P1-P5) est associée à un espace d'adressage pour les données de la mémoire principale (120), chaque groupe d'unités périphériques (P1-P5) étant défini par une plage d'adresses comprenant les espaces d'adressage associés aux unités périphériques correspondantes (P1-P5).

3. Unité formant pont (140) selon la revendication 2, dans laquelle chaque unité périphérique (P1-P5) est capable d'exécuter des opérations de lecture lors de chacune desquelles une pluralité de séries de données sont transférées à l'unité périphérique demandeuse (P1-P5), la profondeur de pré-recherche associée à l'une, courante, des séries, étant calculée en comparant l'adresse d'un élément de données initial de la série courante aux plages d'adresses.

4. Unité formant pont (140) selon l'une quelconque des revendications 1 à 3, comprenant en outre un moyen (315-352) pour faire varier dynamiquement la profondeur de pré-recherche associée à chaque unité périphérique (P1-P5).

5. Unité formant pont (140) selon la revendication 4 lorsqu'elle dépend de la revendication 3, comprenant en outre un moyen (230d) pour stocker une profondeur de pré-recherche prédéterminée et un moyen (315dt, 315d1) pour déterminer une profondeur de pré-recherche modifiée qui est fonction du nombre d'éléments de données dans au moins une série précédant la série courante lors de l'opération de lecture, et un moyen (320, 352) pour fixer la profondeur de pré-recherche associée à la série courante à une valeur égale ou inférieure à la profondeur de pré-recherche stockée correspondante et à la profondeur de pré-recherche modifiée correspondante.

6. Unité formant pont (140) selon la revendication 5, comprenant en outre un moyen (315dl, 315d3) pour stocker la profondeur de pré-recherche modifiée associée à chacune d'une pluralité de séries précédant la série courante lors de l'opération de lecture, et un moyen (330-340) pour n'activer sélectivement le moyen de variation dynamique (315-352) pour la série courante que si un indice indiquant la variabilité des profondeurs modifiées stockées correspondantes est inférieur à une valeur de seuil.

7. Unité formant pont (140) selon la revendication 5 ou 6, comprenant en outre un moyen (315tr) pour n'activer sélectivement le moyen de variation dynamique (315-352) pour la série courante qu'après un nombre prédéterminé de séries initialement transférées lors de l'opération de lecture.

8. Unité formant pont (140) selon l'une quelconque des revendications 3 à 7, comprenant en outre un moyen (365) pour n'activer sélectivement la lecture de façon anticipée par rapport à l'au moins un bloc suivant que si la série courante est constituée d'un nombre d'éléments de données supérieur à une valeur prédéterminée.

9. Système de traitement de données (100) comprenant un bus système (110), une mémoire principale (120) connectée au bus système (110), au moins bus local (130), une pluralité d'unités périphériques (P1-P5) connectées à l'au moins un bus local (130), les unités périphériques (P1-P5) étant capables de lire des données en séquence depuis la mémoire principale (120), et au moins une unité formant pont (140) entre le bus système (110) et l'au moins un bus local (130) selon l'une quelconque des revendications 1 à 8.

10. Procédé de mise en fonctionnement d'une unité formant pont (140) entre un bus système (110) auquel est connectée une mémoire principale (120) et un bus local (130) auquel sont connectées une pluralité d'unités périphériques (P1-P5) capables de lire des données en séquence depuis la mémoire principale (120), dans lequel l'unité formant pont (140) comprend une antémémoire (150) pour copier une pluralité de blocs de données de la mémoire principale (120), le procédé comprenant les étapes consistant à :
lire depuis la mémoire principale (120) et écrire dans l'antémémoire (150) un bloc contenant un élément de données demandé pour l'une des unités périphériques (P1-P5),
lire de façon anticipée depuis la mémoire principale (120) et écrire dans l'antémémoire (150) au moins un bloc faisant suite au bloc contenant l'élément de données demandé, le nombre de l'au moins un bloc suivant étant égal à une profondeur de pré-recherche,
**caractérisé par** les étapes consistant à :
définir une pluralité de groupes disjoints d'unités périphériques (P1-P5),
associer chaque groupe d'unités périphériques (P1-P5) à la profondeur de pré-recherche correspondante.
